# EUROPEAN PATENT APPLICATION

(11) **EP 4 430 990 A1**
(43) Date of publication of application: **18.09.2024**
(21) Application number: 24161091.4
(22) Date of filing: 04.03.2024
(51) Int. Cl.: A47C 3/18, A47B 11/00, A47C 7/66, A47C 11/00

(54) **ROTATING DEVICE FOR OUTDOOR FURNITURE**

(30) Priority: 17.03.2023 CN 202320525833 U
(71) Applicant: Linhai Baocheng Crafts Co., Ltd, Taizhou City Zhejiang Province (CN)
(72) Inventor: Sunhai, Yan, Taizhou City (CN)
(74) Representative: Monteiro Alves, Inês

(57) **Abstract**

A rotating device for outdoor furniture comprising a rotating rail seat, a rotating support and a supporting pedal, wherein the rotating support is mounted in the rotating rail seat in an interacting mode, a pulley in contact with the rotating rail seat is arranged at the bottom of the rotating support, and the supporting pedal is arranged on the rotating support for allowing a sofa tea table to be placed thereon; the supporting pedal rotates in the rotating rail seat along with the rotating support, so that the sofa tea table placed on the supporting pedal is capable of being rotated and adjusted in a direction according to actual needs; when in use, the sofa tea table is placed on the supporting pedal, allowing the sofa tea table to be integrally rotated to meet an adjusted requirement of lighting; the rotating device may also be rotated integrally according to other use requirements, achieving a convenient use; each portion of the entire device is formed by assembling a plurality of components, enabling the device to be conveniently transported when being used in different places.

## Description

### TECHNICAL FIELD

This invention generally relates to the technical field of rotating devices for outdoor furniture.

### BACKGROUND

Sofas, tea tables, and other furniture are commonly used in people's daily lives. Along with the social progress, people's demands for versatility of daily necessities have become increasingly high. Furniture is not only used indoors but also outdoors. For example, when sofas are used outdoors, a lighting issue needs to be faced. Depending on the season, a user may choose whether to face the lighting. Under such circumstances, the movement of the furniture is troublesome. Moreover, it is extremely inconvenient when the furniture needs to be frequently moved to satisfy other use requirements. Therefore, it is urgent for those skilled art to develop a rotating device for outdoor furniture.

### SUMMARY

The purpose of the present invention is to provide a rotating device for outdoor furniture.

To achieve the above purpose, the present invention adopts the following technical solution: a rotating device for outdoor furniture comprises a rotating rail seat, a rotating support and a supporting pedal, wherein the rotating support is mounted in the rotating rail seat in an interacting mode, a pulley in contact with the rotating rail seat is arranged at the bottom of the rotating support, and the supporting pedal is arranged on the rotating support for allowing furniture to be placed thereon. The supporting pedal rotates in the rotating rail seat along with the rotating support, so that the furniture placed on the supporting pedal is capable of being rotated and adjusted in a direction according to actual needs.

In another embodiment of the present invention, the rotating rail seat is provided with an annular rail and an annular rail baffle, the pulley at the bottom of the rotating support abuts against the annular rail, and the annular rail baffle enables the rotating support to rotate in the rotating rail seat.

In another embodiment of the present invention, the rotating support is formed by fixing a plurality of fan-shaped supports, and every two adj acent fan-shaped supports are fixed by means of screws and nuts and are then placed in the rotating rail seat in an interacting mode.

In another embodiment of the present invention, after the plurality of fan-shaped supports in the rotating support are fixedly connected, an annular supporting portion is formed in the middle of the rotating support. A plurality of universal supporting wheels are arranged at the bottom of the annular supporting portion. The supporting pedal is fixed to each fan-shaped support.

In another embodiment of the present invention, an anti-friction roller is arranged on a side face of each fan-shaped support in the rotating support, and the anti-friction roller abuts against a side wall of the annular rail baffle in the rotating rail seat.

In another embodiment of the present invention, the rotating rail seat is formed by fixedly connecting a plurality of rail seat supports, and every two rail seat supports are fixed by means of a splicing assembly.

In another embodiment of the present invention, the number of the rail seat supports corresponds to the number of the fan-shaped supports.

In another embodiment of the present invention, the supporting pedal is formed by a plurality of fan-shaped seat plates and a middle seat plate. The number of the fan-shaped seat plates corresponds to the number of the fan-shaped supports, each fan-shaped seat plate is fixed on a corresponding fan-shaped support, and the middle seat plate is fixed on the annular supporting portion.

Compared with the prior art, the present invention has the following advantages: when in use, furniture such as a sofa tea table is placed on the supporting pedal, allowing the furniture to be integrally rotated to meet an adjusted requirement of lighting; the rotating device may also be rotated integrally according to other use requirements, achieving a convenient use; each portion of the entire device is formed by assembling a plurality of components, enabling the device to be conveniently transported when being used in different places.

### BRIEF DESCRIPTION OF THE DRAWINGS

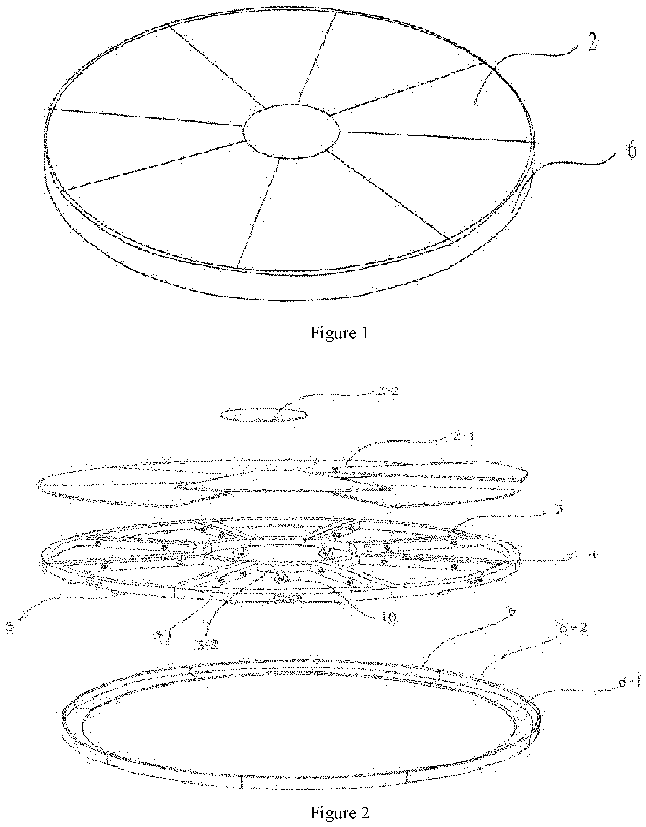

Figure 1 is a schematic diagram illustrating a three-dimensional diagram of the present invention;
Figure 1 is a schematic diagram illustrating an explosive view of the present invention;
Figure 3 is a schematic diagram illustrating an explosive view of the present invention in another state;

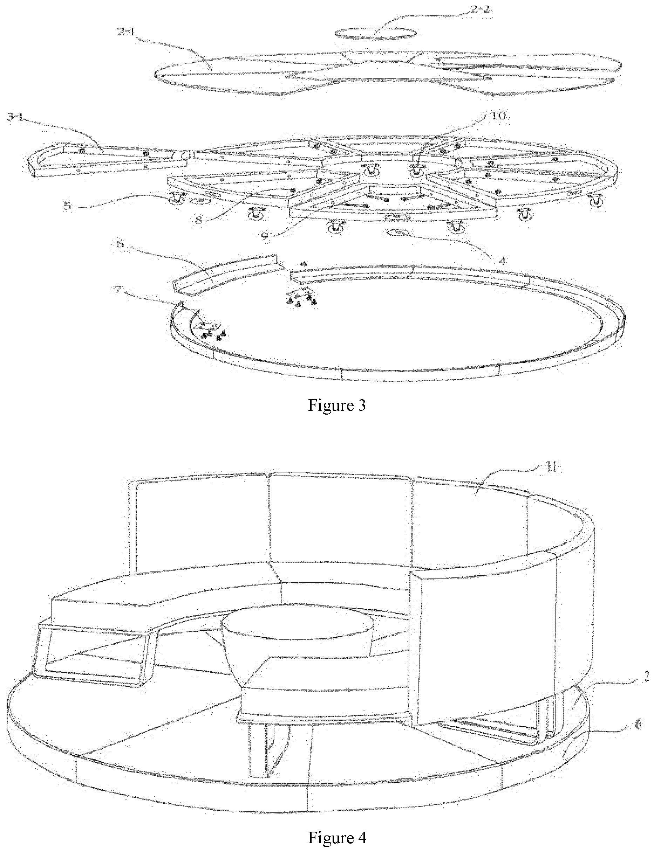

Figure 3 is a schematic diagram illustrating the use state of the present invention.

### DETAILED DESCRIPTION

To make the purposes, technical solutions and benefits of the embodiments of the present invention clearer, the technical solutions in the embodiments of the present invention are clearly and completely described below with reference to the drawings in the embodiments of the present invention. It should be understood that the orientations or positions indicated by the terms "upper", "lower", "front", "rear", "left", "right", "vertical", "horizontal", "bottom", "inner" and "outer are based on the orientations or positions shown in the figures. These terms are merely for the convenience of describing and simplifying the description of the present invention, but not indicating or implying that the equipment or element referred to must have a specific orientation, or be constructed and operated in a specific orientation. Thus, they cannot be understood as a limitation of the present invention.

Figures are combined hereinafter to further elaborate the technical solution of the present invention.

Referring to Figures 1-4, the present invention provides a rotating device for outdoor furniture. The rotating device for outdoor furniture comprises a rotating rail seat 6, a rotating support 3 and a supporting pedal 2, wherein the rotating support 3 is mounted in the rotating rail seat 6 in an interacting mode, a pulley 5 in contact with the rotating rail seat 6 is arranged at the bottom of the rotating support 3, and the supporting pedal 2 is arranged on the rotating support 3 for allowing furniture to be placed thereon. The supporting pedal 2 rotates in the rotating rail seat 6 along with the rotating support 3, so that the furniture placed on the supporting pedal 2 is capable of being rotated and adjusted in a direction according to actual needs. The rotating rail seat 6 is provided with an annular rail 6-1 and an annular rail baffle 6-2, the pulley 5 at the bottom of the rotating support 3 abuts against the annular rail 6-1, and the annular rail baffle 6-2 enables the rotating support 3 to rotate in the rotating rail seat 6.

Further, the rotating support 3 is formed by fixing a plurality of fan-shaped supports 3-1, and every two adjacent fan-shaped supports 3-1 are fixed by means of screws 9 and nuts 8 and are then placed in the rotating rail seat 6 in an interacting mode. The rotating rail seat 6 is formed by fixedly connecting a plurality of rail seat supports 6-6, and every two rail seat supports 6-6 are fixed by means of a splicing assembly 7. The number of the rail seat supports 6-6 corresponds to the number of the fan-shaped supports 3-1.

Further, after the plurality of fan-shaped supports 3-1 in the rotating support 3 are fixedly connected, an annular supporting portion 3-2 is formed in the middle of the rotating support 3. A plurality of universal supporting wheels 10 are arranged at the bottom of the annular supporting portion 3-2, and the universal supporting wheels 10 are used for bearing the pressure while interacting with the pulleys 5 for ensuring the rotation and supporting effect of the rotating support 3. The supporting pedal 2 is fixed to each fan-shaped support 3-1, and the supporting pedal 2 is formed by a plurality of fan-shaped seat plates 2-1 and a middle seat plate 2-2. The number of the fan-shaped seat plates 2-1 corresponds to the number of the fan-shaped supports 3-1, each fan-shaped seat plate 2-1 is fixed on a corresponding fan-shaped support 3-1, and the middle seat plate 2-2 is fixed on the annular supporting portion 3-2.

Further, an anti-friction roller 4 is arranged on a side face of each fan-shaped support 3-1 in the rotating support 3, and the anti-friction roller 4 abuts against a side wall of the annular rail baffle 6-2 in the rotating rail seat 6. The anti-friction roller 4 is capable of transmitting the friction force caused by the collision between the side surface of the rotating support 3 and the annular rail baffle 6-2, achieving better rotation and adjustment.

Referring to Figure 4, when in use, for example, a sofa tea table 11 is placed on the supporting pedal 2, and when the sofa teat table 11 needs to be rotated, a force may be imposed on the sofa tea table 11 for rotation, or a force may be imposed on the supporting pedal 2 for rotation. In actual use, a braking device is also arranged, which belongs to the prior art and is briefly described therein.

The rotating device for outdoor furniture provided in the embodiment of the present invention is described in detail, and specific examples are used herein to describe the principle and embodiment of the present invention. The description of the above embodiment is merely used to help understand the technical solution disclosed in the present invention. Meanwhile, for those skilled in the art, based on the idea of the present invention, modifications may be made in specific embodiments and application ranges. Therefore, the content of the description should not be understood as a limitation to the present invention.

## Claims

1. A rotating device for outdoor furniture **characterized by** comprising:
a rotating rail seat (6),
a rotating support (3), and
a supporting pedal (2), wherein the rotating support (3) is mounted in the rotating rail seat (6) in an interacting mode, a pulley (5) in contact with the rotating rail seat (6) is arranged at the bottom of the rotating support (3), and the supporting pedal (2) is arranged on the rotating support (3) for allowing furniture to be placed thereon, wherein the supporting pedal (2) rotates in the rotating rail seat (6) along with the rotating support (3), so that the furniture placed on the supporting pedal (2) is capable of being rotated and adjusted in a direction according to actual needs.

2. The rotating device for outdoor furniture of claim 1, wherein the rotating rail seat (6) is provided with an annular rail (6-1) and an annular rail baffle (6-2), the pulley (5) at the bottom of the rotating support (3) abuts against the annular rail (6-1), and the annular rail baffle (6-2) enables the rotating support (3) to rotate in the rotating rail seat (6).

3. The rotating device for outdoor furniture of claim 1 or 2, wherein the rotating support (3) is formed by fixing a plurality of fan-shaped supports (3-1), and every two adjacent fan-shaped supports (3-1) are fixed by means of screws (9) and nuts (8) and are then placed in the rotating rail seat (6) in an interacting mode.

4. The rotating device for outdoor furniture of claim 3, wherein after the plurality of fan-shaped supports (3-1) in the rotating support (3) are fixedly connected, an annular supporting portion (3-2) is formed in the middle of the rotating support (3), wherein a plurality of universal supporting wheels (10) are arranged at the bottom of the annular supporting portion (3-2), and wherein the supporting pedal (2) is fixed to each fan-shaped support (3-1).

5. The rotating device for outdoor furniture of claim 3, wherein an anti-friction roller (4) is arranged on a side face of each fan-shaped support (3-1) in the rotating support (3), and the anti-friction roller (4) abuts against a side wall of the annular rail baffle (6-2) in the rotating rail seat (6).

6. The rotating device for outdoor furniture of claim 3, wherein the rotating rail seat (6) is formed by fixedly connecting a plurality of rail seat supports (6-6), and every two rail seat supports (6-6) are fixed by means of a splicing assembly (7).

7. The rotating device for outdoor furniture of claim 6, wherein the number of the rail seat supports (6-6) corresponds to the number of the fan-shaped supports (3-1).

8. The rotating device for outdoor furniture of claim 4, wherein the supporting pedal (2) is formed by a plurality of fan-shaped seat plates (2-1) and a middle seat plate (2-2), wherein the number of the fan-shaped seat plates (2-1) corresponds to the number of the fan-shaped supports (3-1), each fan-shaped seat plate (2-1) is fixed on a corresponding fan-shaped support (3-1), and the middle seat plate (2-2) is fixed on the annular supporting portion (3-2).
